# EUROPEAN PATENT SPECIFICATION

(11) **EP 0 587 291 B1**
(45) Date of publication and mention of the grant of the patent: **12.06.1996**
(21) Application number: 93305981.8
(22) Date of filing: 28.07.1993
(51) Int. Cl.: C09D 11/02, C09D 11/18

(54) **Ink composition for a ball-point pen**
Tintenzusammensetzung für Kugelschreiber
Composition d'encre pour un crayon à bille

(30) Priority: 13.08.1992 JP 257093/92
(43) Date of publication of application: 16.03.1994
(73) Proprietor: KABUSHIKI KAISHA PILOT, Tokyo 141 (JP)
(72) Inventor: Fukasawa, Teruaki, Isezaki-shi, Gunma-ken (JP)
(74) Representative: W.P. Thompson & Co.

(56) References cited:
- GB-A- 1 199 004
- US-A- 4 711 802

## Description

This invention relates to water base ink compositions for a ball-point pen. More particularly, this invention relates to water base ink compositions for filling in a reservoir tube and directly fed to a pen body without using an absorbent ink reservoir and an ink feed rod.

A conventional ball-point pen for water base inks has an absorbent ink reservoir or fibrous reservoir. The ink composition containing a pigment as the colorant and having an ink viscosity of 3 to 5 mPa·s is fed to a pen body from the ink reservoir through an ink feed rod. The absorbent ink reservoir and the ink feed rod are typical features of such ball-point pens as disclosed in, for example, Japanese Patent Laid Open (Kokai) No. 82120/1976, Japanese Patent Publication (Kokoku) No. 688/1979, Japanese Patent Publication No. 37571/1975, Japanese Utility Model Laid Open No. 17184/1983, Japanese Patent Laid Open No. 56528/1979, Japanese Patent Laid Open No. 146796/1980, and Japanese Utility Model Publication No. 35585/1991. This ink feeding method is advantageous in that good ink holding property is provided and thus any one of adequate ink compositions can be used without precise physical properties as an ink. However, it has disadvantages in that the pen body is supplied with less ink as the total amount of ink is reduced during use, thereby causing undesirable variation in thickness of written results. Also, it is difficult to know the amount of ink left in the pen; and the ink holding capacity is small.

It has been proposed to use ink compositions having thixotropic properties rather than using the absorbent ink reservoir. Such ink compositions are disclosed in, for example, Japanese Utility Model Publication No. 233/1986, Japanese Utility Model Publication No. 26077/1986, and Japanese Utility Model Publication No. 23785/1987.

These ink compositions are, however, not satisfactory because of low stability of the ink composition over time, possibility of component precipitation in the composition, ink clogging and crusting trouble due to low resistance to drying up, dripping and running of the ink composition from the pen point of a pen during writing.

An object of the present invention is to provide improved ink compositions as a result of determining the cause of these problems and how to solve them. The ink compositions according to the present invention can be directly filled into a pen body without using an absorbent ink reservoir and an ink feed rod. Such direct filling results in the increased ink holding capacity of a ball-point pen. In addition, this ink composition has high time-stability, high dry-up resistance and good ink release properties while having no spinnability, tackiness tendency and possibilities of dripping. Good ink release properties may reduce undesired wear of the pen body.

According to the present invention there is provided a water base ink composition directly fed to a pen body of a ball-point pen comprising a dyestuff colourant (e.g. dyestuff) in the range of 3% to 10% by weight; a humectant in the range of 10% to 40% by weight; a thixotropic agent in the range of 0.6% to 1.0% by weight, the thixotropic agent being composed of a cross-linkable acrylic acid polymer having a molecular weight ranging from 2,000,000 to 6,000,000; and the balance, water.

Optionally, an anti-drip agent in the range of 0.3% to 0.5%, by weight can be added to the water base ink compositions of this invention.

Also, an anti-corrosive lubricant in the range of 0.2% to 2%, by weight can be added as an optional component.

Examples of other optional ingredients are:
water-proofing agents in the range of 0.5% to 5%, by weight; pH modifiers in the range of 1% to 6%, by weight; and bacteriostats in the range of 1% to 2%, by weight.

Any suitable ingredient can be used for the water base ink compositions directly fed to a pen body of a ball-point pen as set forth herein. Examples include dihydric alcohols, trihydric alcohols and ether derivatives thereof,preferably ethylene glycol and polyethylene glycol.

The anti-drip agent used for purpose of the invention is preferably a water-soluble resin having film-forming properties, preferably a copolymer of polyethylene and polyethylene glycol.

As suitable anti-corrosive lubricants there may be mentioned phosphate surfactants, benzotriazole and fatty acid esters.

Many suitable water proofing agents can be incorporated in the water base ink compositions of the invention such as polyethyleneimine, polyethyleneimine derivatives, polyallylamine and polyallylamine derivatives.

The preferred pH modifier for this invention is triethanolamine.

The improved water base ink compositions of the invention preferably leave a metal ion concentration of equal to or less than 0.45%.

Ball-point pens can generally be classified into two types, i.e., a cap type ball-point pen having a cap and a cap-less type ball-point pen using no cap. A cap type ball-point pen may be carried with its pen point not being lowered. On the other hand, the pen point of the cap-less type ball-point pen is lowered when the pen is held with a clip. Thus, the problem of ink dripping is not always equivalent for both types of ball-point pens. More particularly, it is not necessary to include an anti-drip agent in the ink composition for the cap type ball-point pen. It is, of course, possible to included an anti-drip agent. Of these ink compositions according to the present invention, some containing no anti-drip agent are suitable as the ink composition for the cap type ball-point pen while others containing anti-drip agents provide a remarkable effect as the ink composition for the cap-less type ball-point pen.

It has been found, that a serious problem in the prior art is caused by the material used to provide thixotropic properties. This means that the ordinary thixotropic agents are not suitable for ink compositions. In addition, it was determined that a colorant also introduces a problem. Pigments have no ability to be re-dissolved, so that it is difficult to achieve high time-stability of its dispersions. Ink compositions containing a pigment are thus degraded in functions, as compared with those ink containing dyes. Further, pigments create a defect causing wear of the rolling ball located at a pen point, reducing writing life of a pen.

### PREFERRED EMBODIMENT OF THE INVENTION

A first feature of the present invention is to use a crosslinkable acrylic acid polymer as the thixotropic agent.

The thixotropy is the property of highly viscous gels where weak hydrogen bonding is formed between compounds of components in an aqueous composition. The gel liquifies when subjected to agitation or vibration to break the hydrogen bonding.

Thus, the thixotropic viscous water base ink composition for a ball-point pen is a gel at rest, i.e., at a condition not being used, so that the ink composition will resist dripping, from the pen point of a ball-point pen even if it has no absorbent ink reservoir. The viscous ink composition becomes a thin liquid under the shearing action of the pen's revolving ball-point. As a result, the ink composition having low viscosity is fed to the pen point.

Aqueous compositions can exhibit the thixotropic properties when containing such materials as water soluble resin, gum, as well as inorganic powders such as aluminum hydroxide powder and bentonite.

However, blending of these materials will not results in sufficiently improved ink properties. More particularly, there are problems that the stability of ink composition is degraded, tackiness tendency occurs, and plastic fluidity is not obtained. For these reasons, the above mentioned materials are unsuitable as additives for ink compositions.

In contrast, it has been found that the cross-linkable acrylic acid polymers are superior to impart improved time-stability to the ink composition and to obtain adequate plastic fluidity properties and to avoid potential spinnability and the tackiness tendency.

The cross-linkable acrylic acid polymers suitable for the present invention is a type of crosslinkable polymer where the acrylic polymers having branching and are cross-linked at sites other than the carboxyl group.

According to various experimental results, it has been determined to use the cross-linkable acrylic acid polymer having a molecular weight of not less than 1,700,000 and preferably not less than 2,000,000. The polymer having the molecular weight of larger than 6,000,000 can only be dissolved with resulting turbidity, so that the suitable polymer has the molecular weight ranging from 2,000,000 to 6,000,000. The molecular weight of less than 1,700,000 will cause uneven release of the ink on writing.

The proportion of the cross-linkable acrylic acid polymer in the ink composition is described herein below. Uneven release of the ink composition from the pen or blurred writing are apt to be caused by the water base ink composition having viscosity of larger than 100 mPa·s, under the action of the pen's revolving ball-point. On the other hand, the absorbent ink reservoir can exhibit good ink holding properties only when the ink composition has the viscosity of more than 1,000 mPa·s at rest.

The proportion of the cross-linkable acrylic acid polymer in the ink composition depends on the molecular weight of the polymer used and other additives or ingredients. However, with respect to the viscosity of the ink composition, approximately 0.6%, by weight, should be added to the composition. Preferable results can be obtained with the proportion ranging from 0.6% to 1%, by weight.

A second preferred feature of the present invention is to use dyes as the colorant. Dyes are water-soluble and capable of improving the stability of the ink composition when being added thereinto. In addition, dyes will not cause undesirable wear of the ball located at the pen point and will not cause clogging or crusting at the pen point. Of course, color tone is also satisfactory.

The dyes for good results contain few metal ions and have smaller dissociation factors than the cross-linkable acrylic acid polymer used to avoid influence of the dye on the thickening mechanism of the cross-linkable acrylic acid polymer. The metal ion concentration in the ink composition is preferably equal to or less than 0.45%.

It is considered that the thickening mechanism of the cross-linkable acrylic acid polymer occurs due to repulsion of the COO⁻ ion of the acrylic acid. Accordingly, it is preferable for obtaining the thixotropic ink composition to use dyes having less metal ion represented by Na⁺ that inhibit the repelling action, as well as having structure that hardly affects on the COO⁻ion .

The present invention employs anion dyes. Suitable dyes are acid dyes and direct dyes. Suitable example of dyes used are as follows:

Direct Black 19, Direct Black 154, Direct Blue 3, Acid Blue 90, Acid Red 92, Acid Red 94, and Acid Orange 56.

These and other suitable dyes are well known in the art.

A third preferred feature of the present invention is to use an anti-drip agent.

Suitable anti-drip agents include water-soluble resins having film-forming properties, especially copolymers of polyethylene and polyethylene glycol. Such copolymers serve, in cooperation with the cross-linkable acrylic acid polymer, as a sealing agent that prevents flow of the ink composition when being exposed to the air at the pen point, thereby preventing dripping and running of the ink composition from the pen point of the pen.

The proportion of the anti-drip agent in the composition ranges from 0.3% to 0.5% by weight.

Denaturation of the ink composition at the pen point is generally considered to be unfavorable. This is because the pigments are used as the colorant and became it is impossible to release the ink on a paper when such denaturation occurs. The present invention uses dyes as the colorant, which means that, even though flowability of the ink composition is lost at the pen point, fresh ink is fed, upon use of the pen, to the pen point under revolving action of the ball-point and the water-soluble dyes are re-dissolved in water, enabling release of the ink composition. As compared to this, no pigments will be dispersed in water as the ink compositions after changing from the liquid state losing its flowablity.

Exemplified anti-drip agents are as follows:
Polyethylene-polyethylene glycol copolymer, polyvinyl pyrrolidone, polyvinyl alcohol, propylene glycol alginate ester, cellulose ether, acrylic ester. The anti-drip agents according to the present invention may be selected from the group consisting of the above-mentioned compounds.

A fourth preferred feature of the present invention is to use water-proofing agents selected from the group consisting of polyethyleneimine, polyethyleneimine derivatives, polyallylamine and polyallylamine derivatives. These compounds react with the surface of paper to provide sufficient water resistance to the released ink. The water proofing agent may be contained in the ink composition in the range of 0.5% to 5% by weight.

With humectant, it is possible to prevent the ink compositions from being evaporated and, in turn, to prevent dry-up thereof at the pen point.

The humectant may be selected from the group consisting of ethylene glycol, propylene glycol, glycerin, diethylene glycol, triethylene glycol, dipropylene glycol, thiodiglycol, polyglycerin, polyethylene glycol, polypropylene glycol, ethylene glycol monomethyl ether (trade name: METHYL CELLOSOLVE), ethylene glycol monobutyl ether (trade name: BUTYL CELLOSOLVE), diethylene glycol monomethyl ether (trade name: METHYL CARBITOL), and diethylene glycol ethyl ether (trade name: ETHYL CARBITOL). The ink composition preferably contains the humectant in the range of 10% to 40%, by weight.

The anti-corrosive lubricant may be phosphate surfactants, benzotriazole and fatty acid esters. A pen body of a ball-point pen including water base ink compositions comprises a metal ball and a holder. The metal ball tends to rust away due to the water in the composition, If rusting starts, smooth operation of the ball will be badly affected. It is extremely preferable to contain the anticorrosive lubricant in the ink composition to provide smooth rotation of the ball, as well as to prevent rusting thereof. The anti-corrosive lubricant ranges from 0.2% to 2%, by weight.

Besides, triethanolamine addition of 1% to 6%, by weight, as the pH modifier results in improved stability of the ink composition.

Further a bacteriostat such as 1,2-benziothiazole-3(2H)-one may be added to the ink composition depend on necessary.

The invention will now be further described by way of reference to the following Examples.

### EXAMPLES

The foregoing features of the present invention will be more readily apparent in the context of a specifically delineated set of examples.

### Example 1

An ink composition was prepared by dispersing the indicated proportions of ingredients as follows:

| | |
|---|---|
| Direct Black 154 | 7.5 wt.% |
| Cross-linkable acrylic acid C | 0.6 wt.% |
| Ethylene Glycol | 20.0 wt.% |
| pH Modifier | 1.0 wt.% |
| Anti-corrosive Lubricant | 0.2 wt.% |
| Bacteriostat | 1.0 wt.% |
| Ion Exchange water | (Remainder) |

The properties of this ink composition are set forth in Table 1.

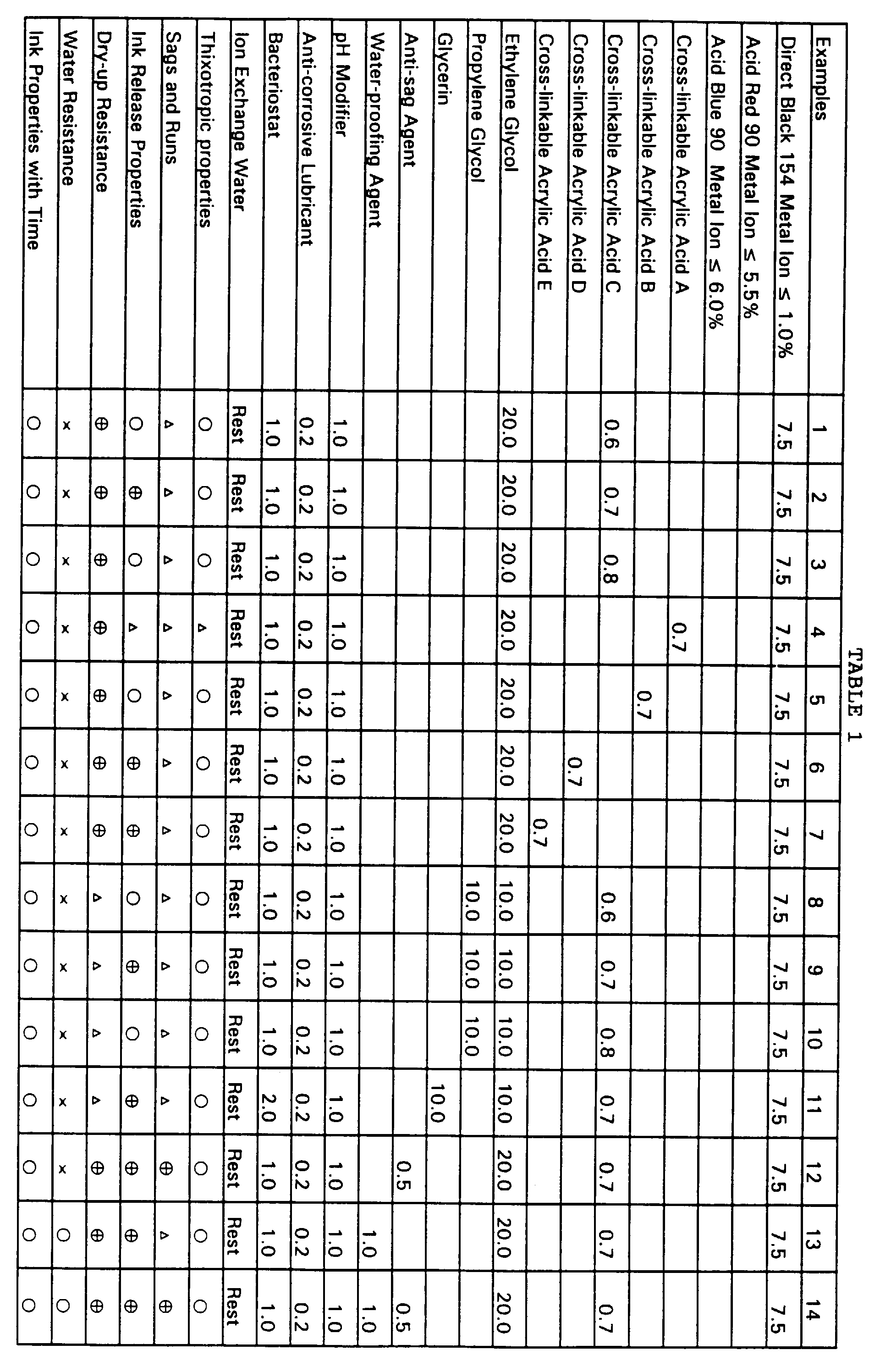

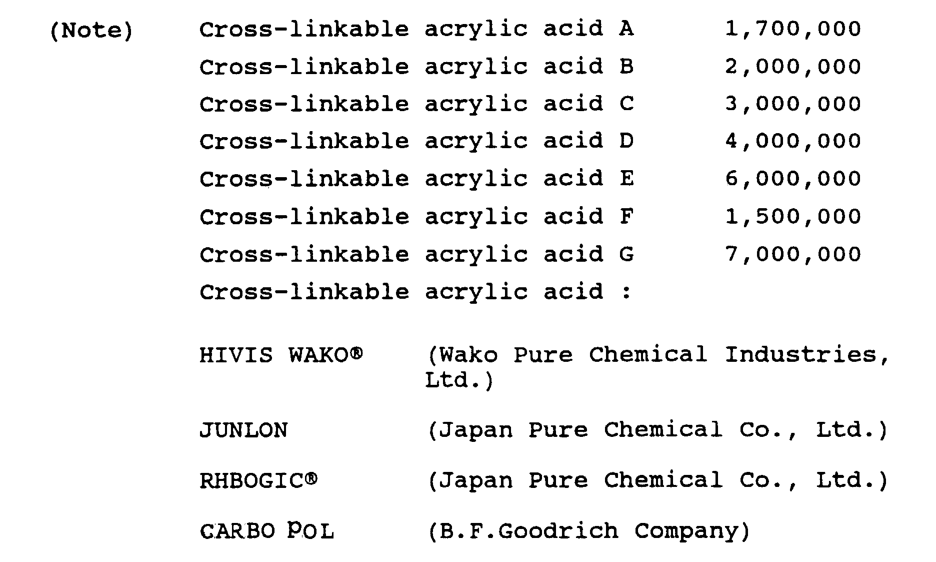

### Examples 2 through 14

The ink compositions were prepared in the same manner as described in Example 1 other than the proportions of ingredients being set forth in Table 1.

### Examples 15 through 31

The ink compositions were prepared in the same manner as described in Example 1 other than the proportions of ingredients being set forth in Table 2.

Symbols in Table 1 are denoted as:
⊕:Very good; ○:Good; Δ:Satisfactory; ×:Not satisfactory

This note is also applicable to Table 2 and 3.

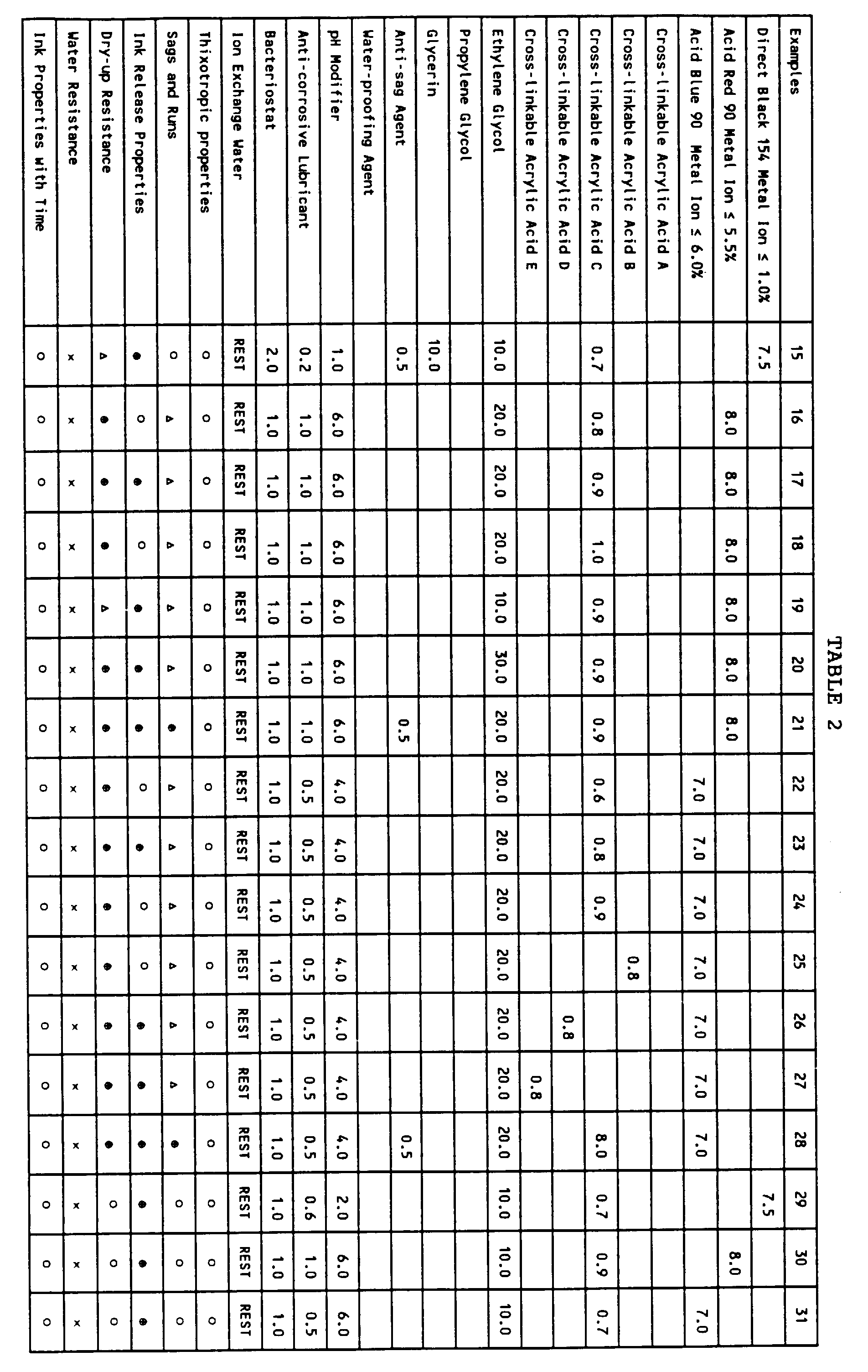

### Comparative examples 1 through 12

The ink compositions were prepared as comparative examples in the same manner as described in Example 1 other than the proportions of ingredients being set forth in Table 3. The proportions of ingredients and the resulting properties are set forth in Table 3 below.

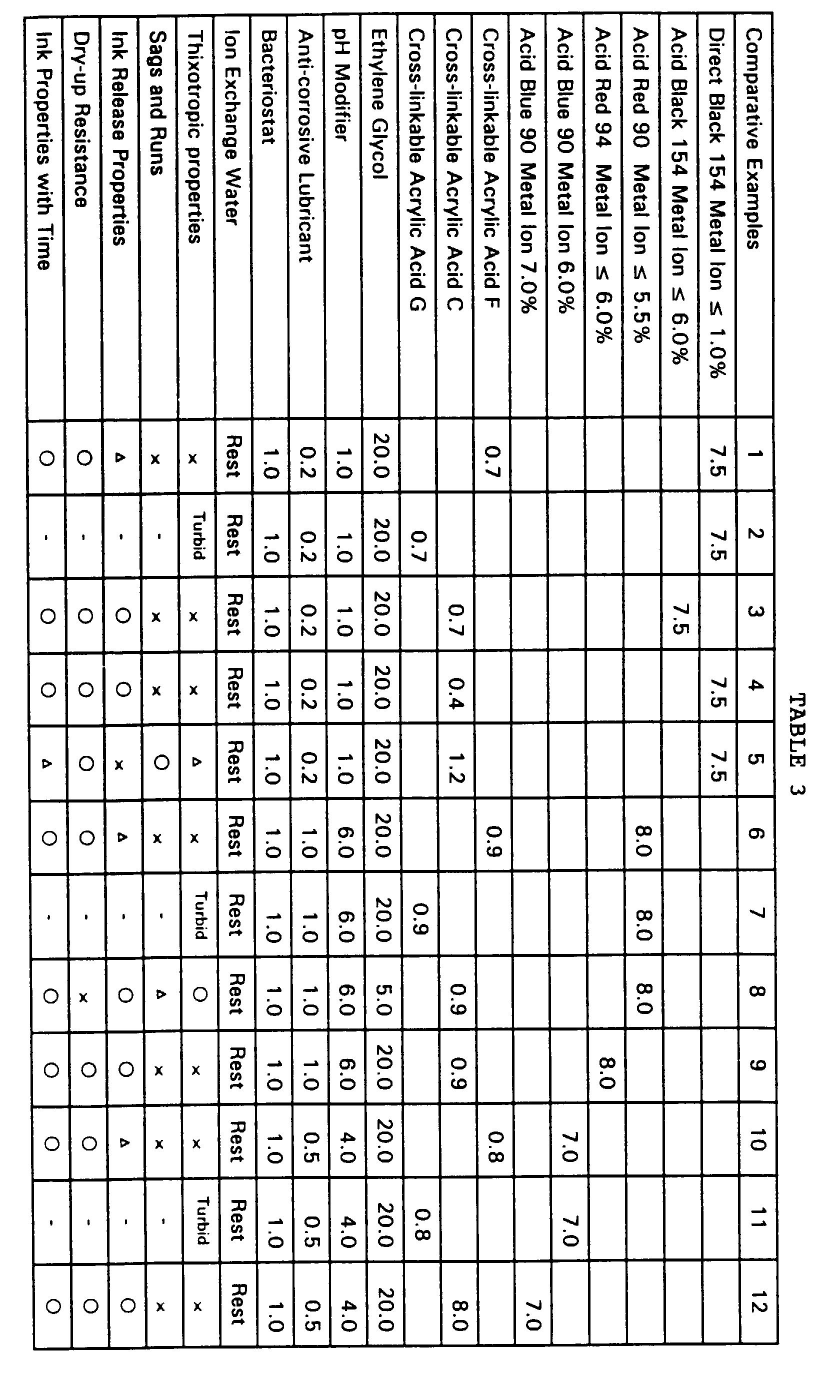

The ink composition according to the present invention can be directly filled in a pen body without using an absorbent ink reservoir and an ink feed rod. Such direct filling results in the increased ink holding capacity of a ball-point pen. In addition, the ink composition has high time-stability, high dry-up resistance and good ink release properties while having no spinnability, tackiness tendency and possibilities of drips and runs from a pen-point. Good ink release properties may reduce undesired wear of the pen body.

## Claims

1. A water base ink composition for directly feeding to a pen body of a ball-point pen comprising a dyestuff in the range of 3% to 10%, by weight; a humectant in the range of 10% to 40%, by weight; a thixotropic agent in the range of 0.6% to 1.0%, by weight, said thixotropic agent being composed of a cross-linkable acrylic acid polymer having a molecular weight ranging from 2,000,000 to 6,000,000; and water as a balance.

2. A water base ink composition, as claimed in claim 1 further comprising an anti-drip agent in the range of 0.3% to 0.5%, by weight.

3. A water base ink composition as claimed in claim 2, wherein said anti-drip agent is a water-soluble resin having film-forming properties.

4. A water base ink composition as claimed in claim 2 or 3, wherein said anti-drip agent is a copolymer of polyethylene and polyethylene glycol.

5. A water base ink composition as claimed in any one of the preceding claims, further comprising an anti-corrosive lubricant in the range of 0.2% to 2%, by weight.

6. A water base ink composition as claimed in claim 5, wherein said anti-corrosive lubricant is selected from the group consisting of phosphate surfactants, benzotriazole and fatty acid esters.

7. A water base ink composition as claimed in any one of the preceding claims, further comprising a water-proofing agent in the range of 0.5% to 5%, by weight.

8. A water base ink composition as claimed in claim 7, wherein said water-proofing agent is selected from the group consisting of polyethyleneimine, polyethyleneimine derivatives, polyallylamine and polyallylamine derivatives.

9. A water base ink composition as claimed in any one of the preceding claims further comprising a pH modifier in the range of 1% to 6% by weight.

10. A water base ink composition as claimed in claim 9, wherein said pH modifier is triethanolamine.

11. A water base ink composition as claimed in any one of the preceding claims, further comprising a bacteriostat in the range of 1% to 2%, by weight.

12. A water base ink composition as claimed in any one of the preceding claims, wherein said humectant is selected from the group consisting of dihydric alcohol, trihydric alcohol and derivatives thereof.

13. A water base ink composition as claimed in any one of the preceding claims, wherein said humectant is selected from the group consisting of ethylene glycol and polyethylene glycol.

14. A water base ink composition as claimed in any one of the preceding claims, wherein said ink has a metal ion concentration of equal to or less than 0.45%.

## Patentansprüche

1. Tintenzusammensetzung auf Wasserbasis für eine direkte Einspeisung in das Gehäuse eines Kugelschreibers, umfassend einen Farbstoff zu etwa 3 bis 10 Gew.-%; ein Feuchthaltemittel zu etwa 10 bis 40 Gew.-%; ein Thixotropiermittel zu etwa 0,6 bis 1,0 Gew.-%, wobei dieses Thixotropiermittel aus einem vernetzbaren Acrylsäurepolymer mit einer relativen Molekülmasse zwischen 2.000.000 und 6.000.000 besteht; und Wasser als Restbestandteil.

2. Tintenzusammensetzung auf Wasserbasis nach Anspruch 1, weiterhin umfassend ein Antitropfmittel zu etwa 0,3 bis 0,5 Gew.-%.

3. Tintenzusammensetzung auf Wasserbasis nach Anspruch 2, worin das genannte Antitropfmittel ein wasserlöslicher Harz mit filmbildenden Eigenschaften ist.

4. Tintenzusammensetzung auf Wasserbasis nach Anspruch 2 oder 3, worin das genannte Antitropfmittel ein Copolymer von Polyethylen und Polyethylenglykol ist.

5. Tintenzusammensetzung auf Wasserbasis nach einem der vorhergehenden Ansprüche, weiterhin umfassend ein korrosionshemmendes Schmiermittel zu etwa 0,2 bis 2 Gew.-%.

6. Tintenzusammensetzung auf Wasserbasis nach Anspruch 5, worin das genannte korrosionshemmende Schmiermittel ausgewählt wird aus der Gruppe bestehend aus Phosphattensiden, Benzotriazol und Fettsäureestern.

7. Tintenzusammensetzung auf Wasserbasis nach einem der vorhergehenden Ansprüche, weiterhin umfassend ein Hydrophobiermittel zu etwa 0,5 bis 5 Gew.-%.

8. Tintenzusammensetzung auf Wasserbasis nach Anspruch 7, worin das genannte Hydrophobiermittel ausgewählt wird aus der Gruppe bestehend aus Polyethylenimin, Polyethylenimin-Derivaten, Polyallylamin und Polyallylamin-Derivaten.

9. Tintenzusammensetzung auf Wasserbasis nach einem der vorhergehenden Ansprüche, weiterhin umfassend ein pH-Modifikationsmittel zu etwa 1 bis 6 Gew.-%.

10. Tintenzusammensetzung auf Wasserbasis nach Anspruch 9, worin das genannte pH-Modifikationsmittel Triethanolamin ist.

11. Tintenzusammensetzung auf Wasserbasis nach einem der vorhergehenden Ansprüche, weiterhin umfassend ein Bakteriostatikum zu etwa 1 bis 2 Gew.-%.

12. Tintenzusammensetzung auf Wasserbasis nach einem der vorhergehenden Ansprüche, worin das genannte Feuchthaltemittel ausgewählt wird aus der Gruppe bestehend aus zweiwertigem Alkohol, dreiwertigem Alkohol und Derivativen davon.

13. Tintenzusammensetzung auf Wasserbasis nach einem der vorhergehenden Ansprüche, worin das genannte Feuchthaltemittel ausgewählt wird aus der Gruppe bestehend aus Ethylenglykol und Polyethylenglykol.

14. Tintenzusammensetzung auf Wasserbasis nach einem der vorhergehenden Ansprüche, worin die genannte Tinte eine Metallionenkonzentration von 0,45% oder weniger aufweist.

## Revendications

1. Composition d'encre à base d'eau pour alimenter directement un corps de crayon d'un crayon à bille comprenant une matière colorante dans la plage de 3% à 10%, en poids; un humectant dans la plage de 10% à 40%, en poids; un agent thixotrope dans la plage de 0,6% à 1,0%, en poids; ledit agent thixotrope étant composé d'un polymère d'acide acrylique réticulable ayant un poids moléculaire allant de 2.000.000 à 6.000.000; et de l'eau en tant que matière d'équilibrage.

2. Composition d'encre à base d'eau, telle que revendiquée à la revendication 1, comprenant en outre un agent anti-gouttes dans la plage de 0,3% à 0,5%, en poids.

3. Composition d'encre à base d'eau, telle que revendiquée à la revendication 2, dans laquelle ledit agent anti-gouttes est une résine soluble dans l'eau ayant des propriétés filmogènes.

4. Composition d'encre à base d'eau, telle que revendiquée à la revendication 2 ou 3, dans laquelle ledit agent anti-gouttes est un copolymère de polyéthylène et de polyéthylèneglycol.

5. Composition d'encre à base d'eau, telle que revendiquée dans l'une quelconque des revendications précédentes, comprenant en outre un lubrifiant anti-corrosif dans la plage de 0,2% à 2%, en poids.

6. Composition d'encre à base d'eau, telle que revendiquée à la revendication 5, dans laquelle ledit lubrifiant anti-corrosif est sélectionné dans le groupe consistant en surfactants de phosphate, benzotriazole et esters d'acides gras.

7. Composition d'encre à base d'eau, telle que revendiquée dans l'une quelconque des revendications précédentes, comprenant en outre un agent d'imperméabilisation dans la plage de 0,5% à 5%, en poids.

8. Composition d'encre à base d'eau, telle que revendiquée à la revendication 7, dans laquelle ledit agent d'imperméabilisation est sélectionné dans le groupe consistant en polyéthylèneimine, dérivés de polyéthylèneimine, polyallylamine et dérivés de polyallylamine.

9. Composition d'encre à base d'eau, telle que revendiquée dans l'une quelconque des revendications précédentes, comprenant en outre un modificateur de pH dans la plage de 1% à 6%, en poids.

10. Composition d'encre à base d'eau, telle que revendiquée à la revendication 9, dans laquelle ledit modificateur de pH est du triéthanolamine.

11. Composition d'encre à base d'eau, telle que revendiquée dans l'une quelconque des revendications précédentes, comprenant en outre un bactériostatique dans la plage de 1% à 2%, en poids.

12. Composition d'encre à base d'eau, telle que revendiquée dans l'une quelconque des revendications précédentes, dans laquelle ledit humectant est sélectionné dans le groupe consistant en dialcool, trialcool et dérivés de ceux-ci.

13. Composition d'encre à base d'eau, telle que revendiquée dans l'une quelconque des revendications précédentes, dans laquelle ledit humectant est sélectionné dans le groupe consistant en éthylène glycol et polyéthylèneglycol.

14. Composition d'encre à base d'eau, telle que revendiquée dans l'une quelconque des revendications précédentes, dans laquelle ladite encre a une concentration d'ions métalliques égale ou inférieure à 0,45%.
